# EUROPÄISCHE PATENTANMELDUNG

(11) **EP 1 512 991 A2**
(43) Veröffentlichungstag der Anmeldung: **09.03.2005**
(21) Anmeldenummer: 04020487.7
(22) Anmeldetag: 28.08.2004
(51) Int. Cl.: G01V 8/14

(54) **Optischer Sensor**

(30) Priorität: 05.09.2003 DE 10341008
(71) Anmelder: Leuze electronic GmbH + Co KG, D-73277 Owen/Teck (DE)
(72) Erfinder: Argast, Martin, 72584 Hülben (DE)
(74) Vertreter: Ruckh, Rainer Gerhard, Dr.

(57) **Zusammenfassung**

Die Erfindung betrifft einen optischen Sensor (1) zur Erfassung von Objekten in einem Überwachungsbereich mit einem Sendelichtstrahlen (3) emittierenden Sender (2), mit einem Empfangslichtstrahlen (4) empfangenden Empfänger (5), welche an einem Ende des Überwachungsbereichs angeordnet sind, sowie einem am gegenüberliegenden Endes Überwachungsbereichs angeordneten Reflektor (7). In einer Modulationseinheit (8) erfolgt die Modulation der Sendelichtstrahlen (3) mit wenigstens einer Messfrequenz. In einer redundanten Auswerteeinheit erfolgt die Ermittlung der Distanz des Reflektors (7) oder eines in den Überwachungsbereich eindringenden Objekts (6) durch Ermittlung der Phasenverschiebung der vom Reflektor (7) oder Objekt (6) zurückreflektierten und auf den Empfänger (5) geführten Empfangslichtstrahlen (4) bezüglich der in der Modulationseinheit (8) ermittelten Messfrequenz zur Generierung. Aus den Messwerten wird ein binäres Schaltsignal ermittelt, wobei die Schaltzustände des Schaltsignals angeben, ob ein Objekteingriff in den Überwachungsbereich erfolgt ist oder nicht. In der Modulationseinheit (8) werden zyklisch nacheinander zwei Messfrequenzen generiert, wobei innerhalb jedes Messzyklus mit einer ersten Distanzmessung mit der ersten Messfrequenz f₁ geprüft wird, ob sich der Reflektor (7) hinter einem ersten Sollabstand d₁ befindet, und mit der zweiten Distanzmessung mit der zweiten Messfrequenz f₃ geprüft wird, ob sich der Reflektor (7) vor einem zweiten Sollabstand d₃ befindet. In der Auswerteeinheit wird nur dann ein Schaltsignal mit dem Schaltzustand freier Überwachungsbereich generiert, wenn beide Prüfbedingungen innerhalb des Messzyklus erfüllt sind.

## Beschreibung

Die Erfindung betrifft einen Optischen Sensor gemäß dem Oberbegriff des Anspruchs 1.

Ein derartiger optischer Sensor ist aus der DE 100 21 590 A1 bekannt. Der dort beschriebene optische Sensor dient zur Detektion von Objekten in einem Überwachungsbereich und umfasst einen Sendelichtstrahlen emittierenden Sender und einen Empfangslichtstrahlen empfangenden Empfänger, welche an einem Ende des Überwachungsbereichs angeordnet sind, sowie einen Reflektor am gegenüberliegenden Ende des Überwachungsbereichs. Zur Modulation der Sendelichtstrahlen ist ein Oszillator vorgesehen, in welchem alternierend zwei verschiedene Frequenzen f₁, f₂ generiert werden, wobei bei mit der Frequenz f₂ modulierten Sendelichtstrahlen eine Objektdetektion erfolgt und wobei mit der Frequenz f₂ modelierten Sendelichtstrahlen eine interne Funktionsüberprüfung erfolgt. Das Taktsignal Uₖ des Oszillators und das Empfangssignal Uₑ am Ausgang des Empfängers, welches aufgrund der Laufzeit der Sende- und Empfangslichtstrahlen zum Reflektor oder zu einem Objekt und zurück zum Empfänger eine Phasenverschiebung bezüglich des Taktsignals Uₖ aufweist, wird einem Synchrongleichrichter zugeführt. Das Ausgangssignal Uₐ des Synchrongleichrichter, welches ein Maß für die Distanz des Reflektors oder des Objekts liefert, wird mit wenigstens einem Schwellwert S 1 zur Generierung eines binären Schaltsignals bewertet, wobei die Schaltzustände des Schaltsignals angeben, ob sich ein Objekt im Überwachungsbereich befindet.

Der Erfindung liegt die Aufgabe zugrunde, einen optischen Sensor der eingangs genannten Art dahingehend weiterzubilden, dass dieser für Einsätze im Bereich der Sicherheitstechnik geeignet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und besteht aus einem Sendelichtstrahlen emittierenden Sender, einem Empfangslichtstrahlen empfangenden Empfänger und einem den Überwachungsbereich begrenzenden Reflektor. Eine Modulationseinheit dient zur Modulation der Sendelichtstrahlen mit wenigstens einer Messfrequenz. Eine redundante Auswerteeinheit dient zur Ermittlung der Distanz des Reflektors oder eines in den Überwachungsbereich eindringenden Objekts durch Ermittlung der Phasenverschiebung der vom Reflektor oder Objekt zurückreflektierten und auf den Empfänger geführten Empfangslichtstrahlen bezüglich der in der Modulationseinheit ermittelten Messfrequenz. Aus diesen Messwerten wird ein binäres Schaltsignal generiert. Die Schaltzustände des Schaltsignals geben an, ob ein Objekteingriff in den Überwachungsbereich erfolgt ist oder nicht. In der Modulationseinheit werden zyklisch nacheinander zwei Messfrequenzen generiert, wobei innerhalb jedes Messzyklus mit einer ersten Distanzmessung mit der ersten Messfrequenz f₁ geprüft wird, ob sich der Reflektor hinter einem ersten Sollabstand d₁ befindet, und mit der zweiten Distanzmessung mit der zweiten Messfrequenz f₃ geprüft wird, ob sich der Reflektor vor einem zweiten Sollabstand d₃ befindet. In der Auswerteeinheit wird nur dann ein Schaltsignal mit dem Schaltzustand freier Überwachungsbereich generiert, wenn beide Prüfbedingungen innerhalb des Messzyklus erfüllt sind.

Durch die zyklische Umschaltung der Messfrequenzen und damit verbunden der Objektdetektion mit unterschiedlichen Messfrequenzen wird die für den Einsatz in der Sicherheitstechnik erforderliche Detektionssicherheit erzielt. Dabei ist wesentlich, dass bei freiem Strahlengang die Position des den Überwachungsbereich begrenzenden Reflektors mit zwei unabhängigen Messungen mit unterschiedlichen, im vorliegenden Fall komplementären Bedingungen für das Vorliegen eines freien Überwachungsbereichs, überprüft wird. Dabei wird bei der Messung mit der ersten Messfrequenz geprüft, ob sich der Reflektor hinter einem ersten Sollabstand befindet, während mit der Messung mit der zweiten Messfrequenz überprüft wird, ob sich der Reflektor vor einem zweiten Sollabstand befindet. Durch die Überprüfung der Reflektorposition mit zwei unabhängigen Messungen mit unterschiedlichen Prüfbedingungen ist nicht nur eine sichere Kontrolle der Reflektorposition, sondern auch darauf basierend eine sichere Objektdetektion gewährleistet. Zusammen mit der redundant ausgebildeten Auswerteeinheit werden hiermit die Anforderungen für den Einsatz des optischen Sensors im Bereich der Sicherheitstechnik erfüllt.

Zur Objekt- und Reflektorerkennung können bei dem erfindungsgemäßen optischen Sensor unterschiedliche Phasenmessverfahren eingesetzt werden. Die Anordnung gemäß den Ansprüchen 3 und 4 stellt eine besonders einfache und kostengünstige Variante dar. Dabei ist vorteilhaft, dass die verwendete Messfrequenzen innerhalb eines vorgegebenen Frequenzbereichs einstellbar sind, wodurch die Phasenmessung einfach an unterschiedliche Messbedingungen anpassbar ist.

Die Ausbildung der redundanten Auswerteeinheit gemäß den Ansprüchen 5 und 6 zur Ansteuerung des Schaltausgangs, über welche das Schaltsignal ausgebbar ist, eignet sich insbesondere für Einsätze des optischen Sensors im Bereich der Sicherheitskategorie 4.

Zur Kontrolle der Reflektorposition wird bevorzugt die Schwellwertbewertung gemäß Anspruch 8 durchgeführt. Dabei sind die Schwellwerte in der Auswerteeinheit fest vorgegebene Größen. Besonders vorteilhaft wird über den gesamten Signalverlauf während eines Zyklus, innerhalb dessen die Messungen mit den beiden Messfrequenzen erfolgen, der Schwellwertvergleich durchgeführt. Damit kann über den gesamten Zyklus geprüft werden, ob der Schwellwertvergleich zulässige oder unzulässige Signalkombinationen liefert. In Abhängigkeit dazu kann nicht nur eine sichere Objektdetektion durchgeführt werden. Weiterhin können damit auch Störungen aufgedeckt werden wie zum Beispiel Verschiebungen des Reflektors aus seiner Sollposition.

Anspruch 9 betrifft eine vorteilhafte Variante, gemäß derer die Messfrequenzen in einem Einlernvorgang ermittelt werden. Zur Erfüllung der Sicherheitsanforderungen für den optischen Sensor kann der Einlernvorgang bevorzugt nur mit einem sicherheitsrelevanten Teachbefehl, insbesondere durch ein passwortgeschütztes Benutzerprogramm, erfolgen.

Die Ansprüche 10 - 14 betreffen vorteilhafte Ausführungsformen mit Maßnahmen zur Fehlerkontrolle, Fehleraufdeckung und Fehlerkompensation. Durch diese Maßnahmen wird die Funktionssicherheit des optischen Sensors erheblich erhöht.

Die Erfindung wird im Nachstehenden anhand der Zeichnungen erläutert. Es zeigen
- Figur 1:: Blockschaltbild eines Ausführungsbeispiels des erfindungsgemäßen optischen Sensors mit einem Synchrongleichrichter und Integrator als Phasenmesseinrichtung.
- Figur 2:: Schematische Darstellung des Strahlenganges für ein Ausführungsbeispiel des optischen Sensors gemäß Figur 1 mit koaxialer Anordnung einer Sende- und Empfangsoptik.
- Figur 3:: Amplitudenverlauf des Ausgangssignals U₁ des Synchrongleichrichters in Abhängigkeit der Reflektordistanz bei der Frequenz f₂.
- Figur 4:: Zeitlicher Signalverlauf des Ausgangssignals Uₖ des Integrators während eines Einlernvorgangs.
- Figur 5:: Distanzabhängiger Amplitudenverlauf von U₁ bei freiem Überwachungsbereich für die Messfrequenzen f₁ und f₃.
- Figur 6:: Zeitlicher Signalverlauf von Uₖ bei freiem Überwachungsbereich für einen Messzyklus mit den Messfrequenzen f₁ und f₃.
- Figur 7:: Distanzabhängiger Amplitudenverlauf von U₁ bei einem diffus reflektierenden Objekt im Überwachungsbereich für die Messfrequenzen f₁ und f₃.
- Figur 8:: Zeitlicher Signalverlauf von Uₖ bei einem diffus reflektierenden Objekt im Überwachungsbereich für einen Messzyklus mit den Messfrequenzen f₁ und f₃.
- Figur 9:: Diagramm des zeitlichen Signalverlaufes von Uₖ bei einem Fremdreflektor im Überwachungsbereich für einen Messzyklus mit den Messfrequenzen f₁ und f₃.
- Figur 10:: Distanzabhängiger Amplitudenverlauf von U₁ bei einem zu größerer Entfernung hin verschobenen Reflektor für die Messfrequenz f₁ und f₃.
- Figur 11:: Zeitlicher Signalverlauf von Uₖ für die Anordnung gemäß Figur 10 für einen Messzyklus mit den Messfrequenzen f₁ und f₃.
- Figur 12:: Diagramm des zeitlichen Signalverlaufes von Uₖ bei einem zu kürzerer Entfernung hin verschobenen Reflektor für einen Messzyklus mit den Messfrequenzen f₁ und f₃.
- Figur 13:: Diagramm des zeitlichen Signalverlaufes von Uₖ für einen erweiterten Messzyklus mit den Messfrequenzen f₁ und f₃ und der Frequenz f₂.

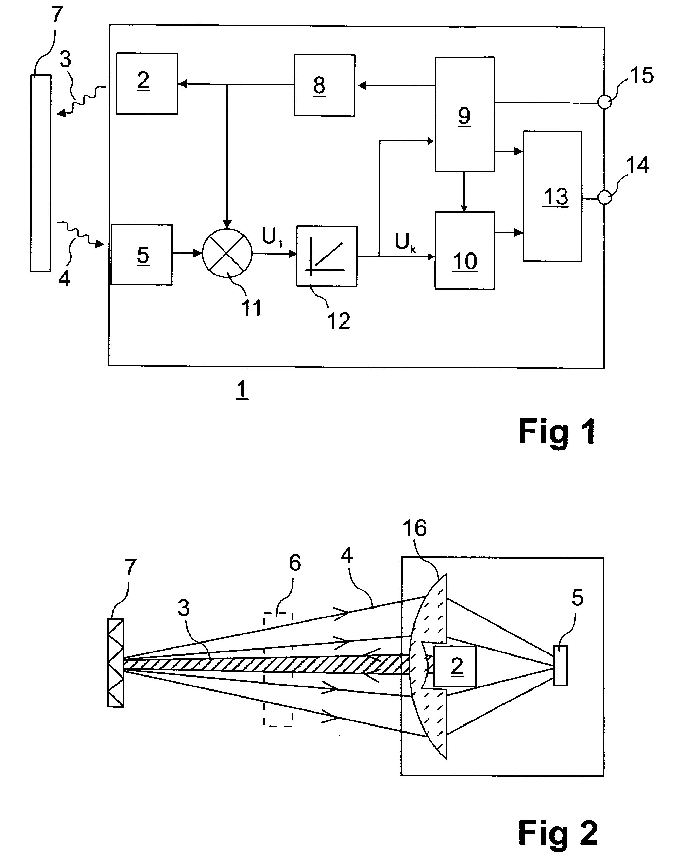

Figur 1 zeigt ein Blockschaltbild eines Ausführungsbeispiels des erfindungsgemäßen optischen Sensors 1. Der optische Sensor 1 weist einen Sender 2 auf, der von einer Laserdiode oder dergleichen gebildet ist, und welcher Sendelichtstrahlen 3 in den Überwachungsbereich emittiert. Weiterhin weist der optische Sensor 1 einen Empfangslichtstrahlen 4 empfangenden Empfänger 5 auf, welcher von einer Fotodiode oder einer Avalanche-Diode gebildet ist.

Die in den Überwachungsbereich geführten Sendelichtstrahlen 3 werden von einem zu detektierenden Objekt 6 als Empfangslichtstrahlen 4 auf den Empfänger 5 zurückreflektiert . Der Überwachungsbereich ist von einem Reflektor 7 begrenzt, auf welchen die Sendelichtstrahlen 3 auftreffen, falls sich kein Objekt im Überwachungsbereich befindet.

Die Objekterfassung erfolgt mittels einer Phasenmessung. Hierzu wird den Sendelichtstrahlen 3 mittels einer Modulationseinheit 8 eine Amplitudenmodulation mit vorgegebener Modulationsfrequenz aufgeprägt. Die Modulationseinheit 8 ist von einem VCO (vottage controlled oscillation), einem Frequenzsynthesizer oder dergleichen gebildet. Die in der Modulationseinheit 8 generierte Modulationsfrequenz ist innerhalb eines bestimmten Frequenzbereichs veränderbar.

Die Modulationseinheit 8 wird von einer redundanten Auswerteeinheit angesteuert, in welcher auch die Empfangssignale des Empfängers 5 zur Objektedetektion ausgewertet werden. Die Auswerteeinheit besteht im vorliegenden Fall aus zwei Rechnereinheiten 9, 10. Im vorliegenden Fall bildet eine Rechnereinheit 9 einen Master, welche die zweite Rechnereinheit 10 als Slave steuert. Alternativ können zwei identische, sich gegenseitig überwachende Rechnereinheiten 9, 10 vorgesehen sein. Eine Rechnereinheit 9 steuert die Modulationseinheit 8 an.

Als Phasenmesseinrichtung weist der optische Sensor 1 einen Synchrongleichrichter 11 und einen diesem nachgeordneten Integrator 12 auf. Dem Synchrongleichrichter 11 werden als Eingangssignale das Taktsignal am Ausgang der Modulationseinheit 8, mittels dessen der Sender 2 angesteuert wird, sowie die Empfangssignale am Ausgang des Empfängers 5 zugeführt. Das Signal U₁ am Ausgang des Synchrongleichrichters 11 wird dem Integrator 12 zugeführt. Das Signal Uₖ am Ausgang des Integrators 12 wird in beide Rechnereinheiten der Auswerteeinheit eingelesen.

Die vom Reflektor 7 oder einem Objekt 6 zurückreflektierten Empfangslichtstrahlen 4 weisen dieselbe Modulation wie die Sendelichtstrahlen 3 auf. Aufgrund der Laufzeit der Sendelichtstrahlen 3 und Empfangslichtstrahlen 4 zum Reflektor 7 bzw. Objekt 6 und zurück zum Empfänger 5, weisen die Empfangslichtstrahlen 4, die auf den Empfänger 5 auftreffen, und damit auch die dadurch generierten Empfangssignale eine Phasenverschiebung bezüglich des Taktsignals am Ausgang der Modulationseinheit 8 auf. Diese Phasenverschiebung wird im Synchrongleichrichter 11 als Maß für die Distanz des Reflektors 7 bzw. Objekts 6 zum optischen Sensor 1 ermittelt und in der Auswerteeinheit ausgewertet.

Aus den Distanzinformationen wird in der Auswerteeinheit ein binäres Schaltsignal abgeleitet, dessen Schaltzustände angeben, ob noch ein Objekt 6 im Überwachungsbereich befindet oder nicht. Die in den Recheneinheiten 9,10 generierten Schaltsignale werden einem Vergleicher 13 zugeführt, dessen Ausgang auf einen Schaltausgang 14 geführt ist. Dabei erfolgt eine Ausgabe des Schaltsignals "Überwachungsbereich frei" nur dann, wenn im Vergleicher 13 festgestellt wird, dass beide Recheneinheiten ein Schaltsignal generieren, dessen Schaltzustand dem freien Überwachungsbereich entspricht.

Schließlich ist an eine der Rechnereinheiten 9,10 eine serielle Schnittstelle 15 zur Ein- und Ausgabe von Daten angeschlossen.

Figur 2 zeigt den Optikaufbau für den optischen Sensor 1 gemäß Figur 1. Der Sender 2 und der Empfänger 5 sind koaxial hinter einer Sende- und Empfangsoptik 16 angeordnet. Mit der Sende- und Empfangsoptik 16 erfolgt eine Strahlformung der Sendelichtstrahlen 3 und eine Fokussierung der Empfangslichtstrahlen 4 auf den Empfänger 5.

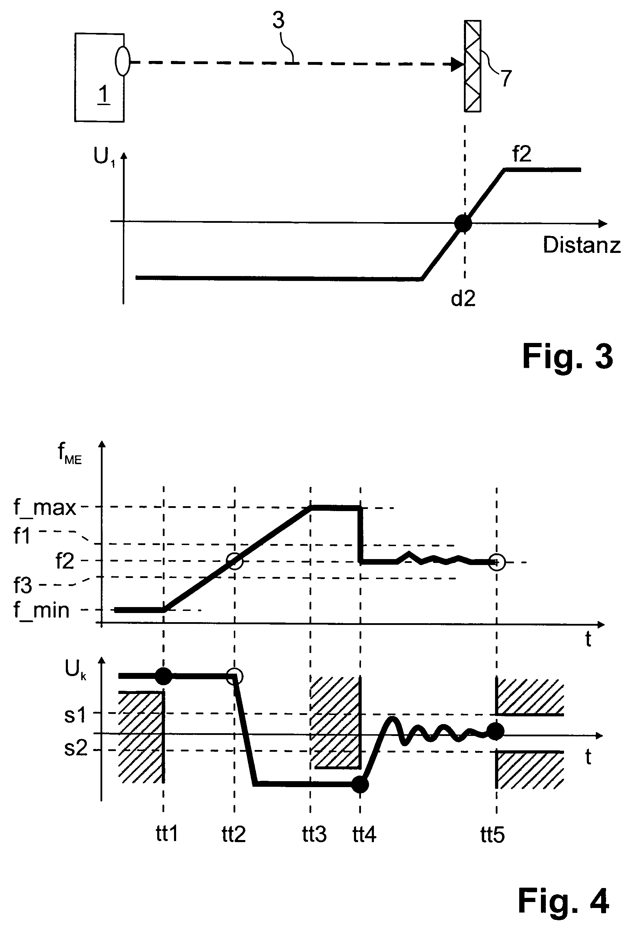

Figur 3 zeigt schematisch einen in einer Distanz d2 zum optischen Sensor 1 liegenden Reflektor 7, auf welchen die Sendelichtstrahlen 3 des Senders 2 gerichtet sind. Weiterhin ist in Figur 3 schematisch der Amplitudenverlauf des Signals U₁ am Ausgang des Synchrongleichrichters 11 in Abhängigkeit der Reflektordistanz für den Fall dargestellt, dass die Sendelichtstrahlen 3 durch die Modulationseinheit 8 mit einer Frequenz f₂ moduliert sind. Wie aus Figur 3 ersichtlich, liegt der Nulldurchgang von U₁ bei der Reflektordistanz d₂.

In einem Einlernvorgang wird für eine vorgegebene Reflektordistanz d₂ die hierzu gehörige Frequenz f₂ bestimmt. Aus dieser Frequenz werden dann Messfrequenzen f₁ und f₃ berechnet und festgelegt, mittels derer während der auf den Einlernvorgang folgenden Betriebsphase die Phasenmessungen zur Objektdetektion durchgeführt werden.

Figur 4 (unteres Diagramm) zeigt den zeitlichen Verlauf des Signals Uₖ am Ausgang des Integrators 12 während des Einlernvorgangs. Der Einlernvorgang wird bei freiem Überwachungsbereich bei in der Distanz d₂ zum optischen Sensor 1 angeordneten Reflektor 7, wie in Figur 3 dargestellt, durchgeführt. Zur Durchführung des Einlernvorganges wird die Modulationsfrequenz f_{ME}, die in der Modulationseinheit 8 erzeugt wird, in Schritten von einer Minimalfrequenz fₘᵢₙ auf eine Maximalfrequenz fₘₐₓ erhöht, wie aus dem oberen Diagramm in Figur 4 ersichtlich ist.

Wie aus dem unteren Diagramm in Figur 4 ersichtlich, bleibt das Signal Uₖ bei Erhöhung der Frequenz f_{ME} von fₘᵢₙ aus zunächst konstant und sinkt bei Erreichen der Frequenz f₂ schlagartig ab, da dort der Nulldurchgang des Signals U₁ liegt. Durch Bewertung von Uₖ mit den Schwellwerten S1 und S2, die in der Auswerteeinheit als fest vorgegebene Parameterwerte hinterlegt sind, wird der die Frequenz f₂ definierende Signalwert von Uₖ erfasst.

Die so ermittelte Frequenz f₂ wird dann zwischen den Zeitpunkten tt₄ und tt₅ eingestellt und deren genauer Wert mit Hilfe eines Regelalgorithmus ermittelt und in der Auswerteeinheit als Referenzwert abgespeichert. Bei dem Regelalgorithmus wird der Wert von Uₖ auf den Mittelwert zwischen den Schwellwerten S 1 und S2 eingeregelt.

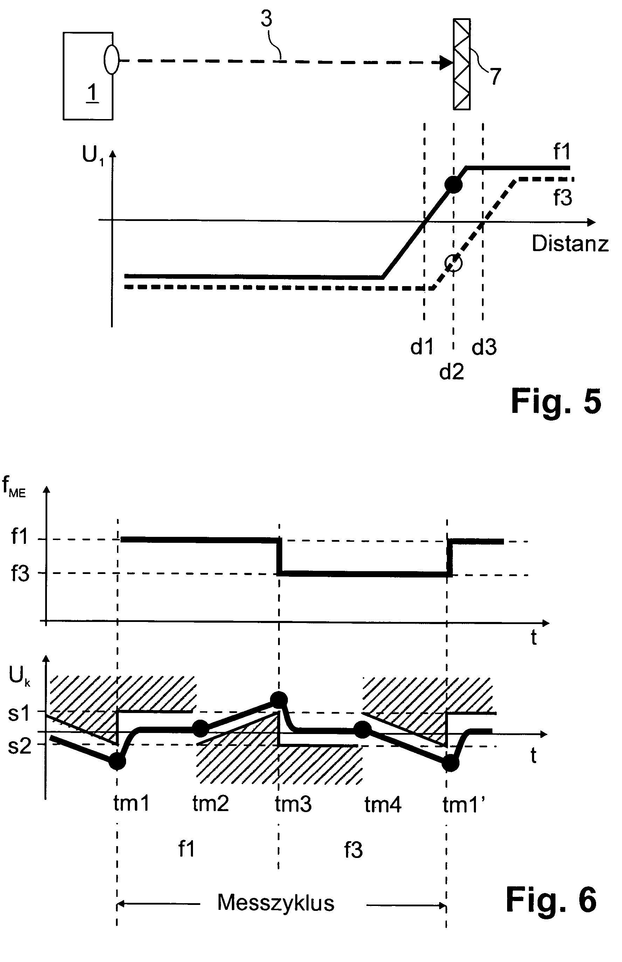

Aus der Frequenz f₂ werden die Messfrequenzen f₁, f₃ berechnet, welche während der Betriebsphase zur Objektdetektion verwendet werden. Figur 5 zeigt den Amplitudenverlauf des Signals U₁ für die Messfrequenzen f₁, f₃ in Abhängigkeit der Reflektordistanz.

Die Messfrequenz f₁ ist so gewählt, dass das Signal U₁ bei Modulation des Senders 2 mit f₁ seinen Nulldurchgang bei einer Distanz d₁ aufweist, die kleiner ist als die Distanz d₂, für welche das Signal U₁ bei Modulation mit f₂ seinen Nulldurchgang hat. Dementsprechend ist U₁ bei der Modulation des Senders 2 mit der Messfrequenz f₁ bei d = d₂ positiv.

Die Messfrequenz f₃ ist so gewählt, dass das Signal U₁ bei Modulation des Senders 2 mit f₃ seinen Nulldurchgang bei einer Distanz d3 aufweist, die größer ist als die Distanz d₂, für welche das Signal U₁ bei Modulation mit f₂ seinen Nulldurchgang hat. Dementsprechend ist U₁ bei der Modulation des Senders 2 mit der Messfrequenz f₃ bei d = d₂ negativ.

Während des Betriebs des optischen Sensors 1 wird zur Objektdetektion über die Auswerteeinheit zyklisch zwischen den beiden Messfrequenzen umgeschaltet. Figur 6, oberes Diagramm, zeigt die Umschaltung der Messfrequenzen während eines Messzyklus. Das untere Diagramm zeigt den hierbei erhaltenen Verlauf des Signals Uₖ bei freiem Überwachungsbereich. Während des ersten Teilintervalls zwischen tm₁ und tm₃ wird der Sender 2 mit der Messfrequenz f₁ moduliert. In diesem Teilintervall wird ein Vergleich des Signals Uₖ mit dem Schwellwert S1 durchgeführt. Zu Beginn des Teilintervalls wird der Integrator 12 zurückgesetzt auf den Ausgangswert "0", so dass sich dieser bis zum Zeitpunkt tm₂ entlädt. Bei fehlerfreier Detektion darf das Signal Uₖ nicht in den schraffiert dargestellten Bereich eindringen, d.h. Uₖ muss unterhalb von S1 bleiben. Ab dem Zeitpunkt tm₂ wird durch Integration des Signals U₁ mittels des Integrators 12 das Signal Uₖ linear erhöht und überschreitet schließlich den Schwellwert S1.

Im zweiten Teilintervall zwischen tm₃ und tm₁ wird der Sender 2 mit der Messfrequenz f₃ moduliert. In diesem Teilintervall wird durch einen Vergleich des Signals Uₖ mit dem Schwellwert S2 geprüft, ob sich der Reflektor 7 vor dem Sollabstand d₃ befindet. Wenn das Signal Uₖ am Ende des zweiten Teilintervalls den Schwellwert S2 unterschreitet, ist dies der Fall. Auch im zweiten Teilintervall wird der Integrator 12 zunächst rückgesetzt und entladen, wobei in dem entsprechenden Zeitintervall zwischen tm₂ und tm₄ das Signal Uₖ nicht den Schwellwert S2 unterschreiten darf. Erst im Intervall zwischen tm₄ und tm_{1'} wird das Signal U₁ integriert, wodurch Uₖ linear fällt. Hier muss als Bedingung für die Detektion der Reflektorposition vor d₃ das Signal Uₖ unter den Schwellwert S2 absinken.

Wenn sämtliche Prüfbedingungen innerhalb des Messzyklus erfüllt sind, wird nach dem Messzyklus gemäß Figur 6 in der Auswerteeinheit das Schaltsignal "Überwachungsbereich frei" generiert und über den Schaltausgang ausgegeben.

In Figur 6 und den entsprechenden nachfolgenden Zeitdiagrammen sind jeweils in schraffierter Darstellung "verbotene Zonen" gekennzeichnet. Befindet sich das Signal in einer dieser "verbotenen Zonen", liegt eine Abweichung gegenüber dem geforderten Signalverlauf für den freien Überwachungsbereich vor.

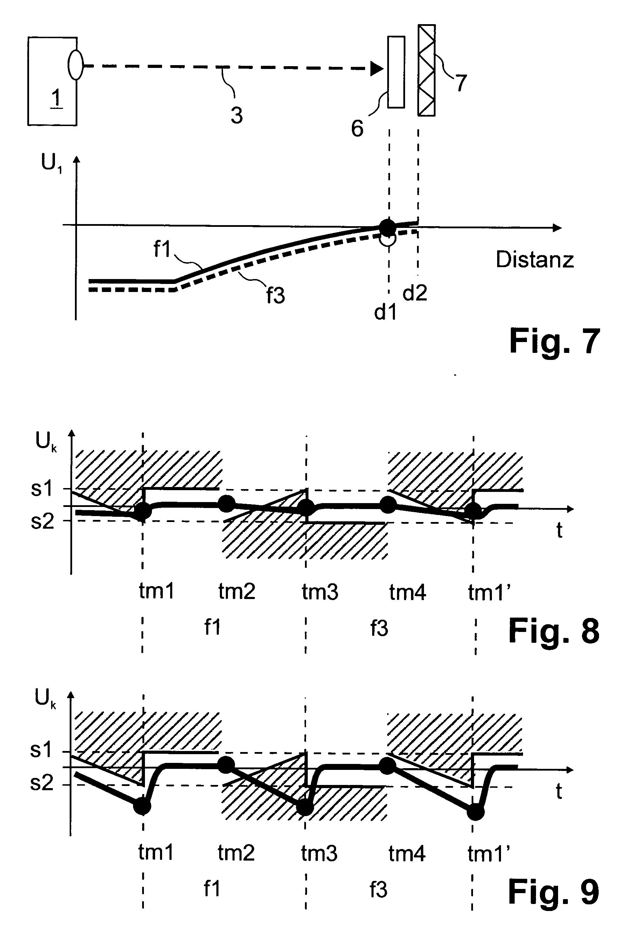

Figur 7 zeigt den distanzabhängigen Verlauf des Signals U₁ bei Modulation des Senders 2 mit der Messfrequenz f₁ und f₃ für den Fall, dass sich ein diffus reflektierendes Objekt vor dem Reflektor 7 im Überwachungsbereich befindet. Da in diesem Fall eine erheblich geringere Lichtmenge als bei freiem Überwachungsbereich zum Empfänger 5 gelangt, ist auch die Amplitude von U₁ gegenüber dem in Figur 5 dargestellten Fall reduziert.

Dementsprechend wird bei der Detektion des Objektes 6 während eines Messzyklus für das Signal Uₖ der in Figur 8 dargestellte zeitliche Verlauf erhalten, der vom Signalverlauf bei freiem Überwachungsbereich (Figur 6) dadurch abweicht, dass zum Zeitpunkt tm₃ das Signal Uₖ den Schwellwert S1 nicht überschreitet. Zudem wird zu den Zeitpunkten tm₁ bzw. tm_{1'} der Schwellwert S2 nicht mehr wie gefordert unterschritten. Damit wird nach Ende des Messzyklus in diesem Fall ein Schaltsignal mit dem Schaltzustand "Objekt erkannt" generiert und über den Schaltausgang ausgegeben.

Figur 9 zeigt den Signalverlauf von Uₖ während eines Messzyklus für den Fall, dass anstelle des diffus reflektierenden Objektes 6 ein Retroreflektor als Objekt 6 in den Überwachungsbereich eingedrungen ist. Auch in diesem Fall überschreitet Uₖ den Schwellwert S2 zum Zeitpunkt tm₃ nicht, so dass am Ende des Messzyklus eine Objektmeldung generiert und über den Schaltausgang ausgegeben wird.

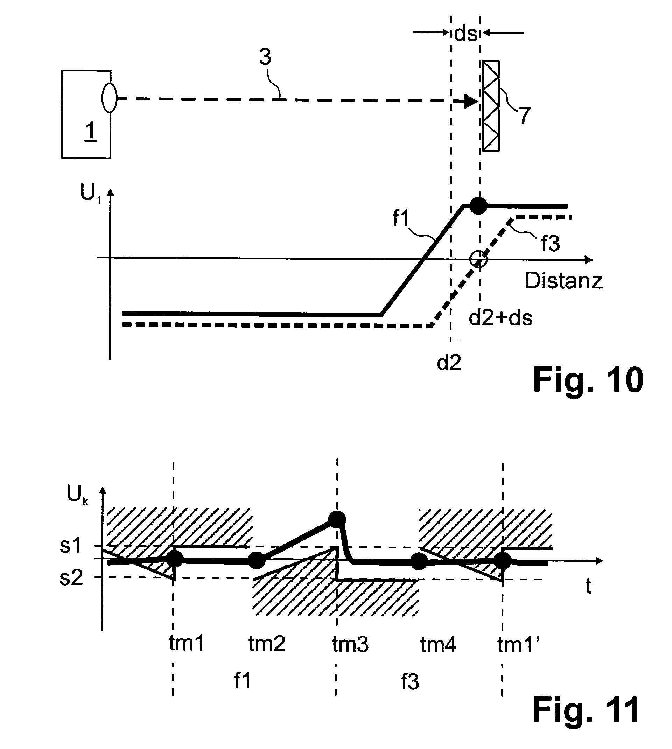

Figur 10 zeigt schematisch den Fall eines aus seiner Sollposition bei d₂ zu einer größeren Distanz d₂ + ds hin verschobenen Reflektors 7. Weiterhin sind die Signalverläufe von U₁ bei Modulation des Senders 2 mit den Messfrequenzen f₁, f₃ dargestellt.

Figur 11 zeigt den hiefür erhaltenen zeitlichen Verlauf von Uk während eines Messzyklus mit den Messfrequenzen f1 und f3. Die Verschiebung der Reflektorposition wird dadurch erkannt, dass der Schwellwert S2 zum Zeitpunkt tm₁ bzw. tm_{1'} nicht mehr unterschritten wird.

Der Vergleich von Figur 11 mit den Diagrammen von Figur 6, 8 und 9 zeigt, dass sich der Signalverlauf von Uₖ bei der Reflektorverschiebung gemäß Figur 10 signifikant von den Signalverläufen von Uₖ bei freiem Strahlengang oder bei einer Objektdetektion unterscheidbar ist, wodurch diese Reflektorverschiebung sicher erkannt werden kann.

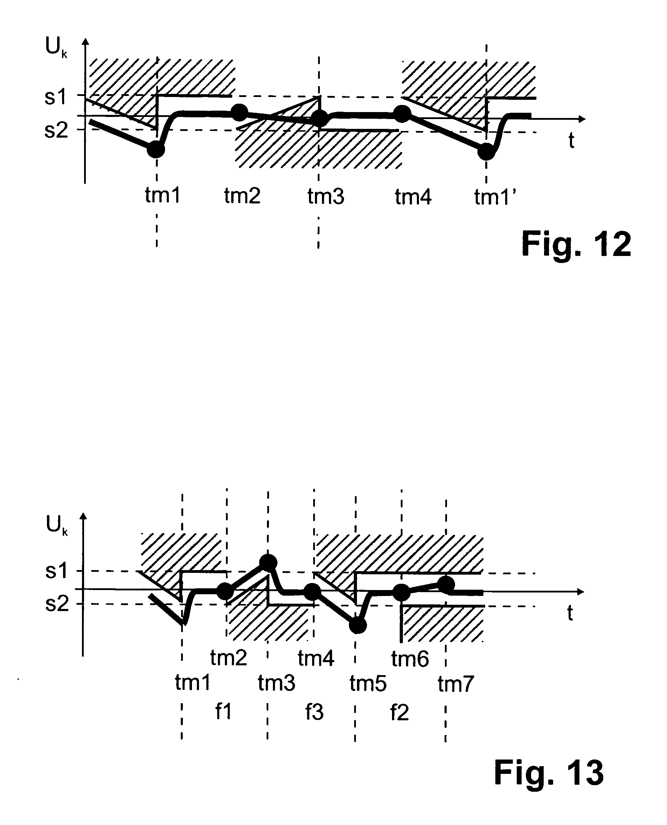

Figur 12 zeigt das Diagramm des zeitlichen Signalverlaufs von Uₖ bei einem zu kürzerer Entfernung hin verschobenen Reflektor 7. Dieser Signalverlauf entspricht dem Signalverlauf von Uₖ bei Detektion eines Retroreflektors als Objekt 6 im Überwachungsbereich vor dem Reflektor 7 (Figur 9). In diesem Fall ist aus der Analyse des Verlaufs von Uₖ keine Unterscheidung zwischen Objektdetektion und Reflektorverschiebung möglich. Die Reflektorverschiebung kann in diesem Fall durch Auswertung zusätzlicher Informationen ermittelt werden.
Durch eine Reflektorverschiebung oder durch Driften von Bauelementen im optischen Sensor 1 ändert sich der Bezugspunkt der Distanzmessung. Damit ist eine sichere Überprüfung der Sollabstände des Reflektors 7 durch Bewertung der Signale mit den Schwellwerten S1, S2 nicht mehr gewährleistet.

Um diese Fehlerquelle auszuschließen, kann die Frequenz f₂ in derartigen Fällen derart nachgeführt werden, dass bei freiem Überwachungsbereich die Signale Uₖ in den Messzyklen wieder dem in Figur 6 vorgegebenen Soll-Verlauf entsprechen.

Zum Zweck der Driftkontrolle oder Kompensation einer Reflektorverschiebung wird der Messzyklus wie in Figur 13 dargestellt vorübergehend erweitert. Dann besteht ein Messzyklus aus einem ersten Teilintervall zwischen tm₁ und tm₃, innerhalb dessen der Sender 2 mit der Messfrequenz f₁, moduliert ist, einem zweiten Teilintervall zwischen tm₃ und tm₅, innerhalb dessen der Sender 2 mit der Messfrequenz f₃ moduliert ist, und einem Teilintervall zwischen tm₅ und tm₇, innerhalb dessen der Sender 2 mit der Frequenz f₂ moduliert ist.

Ein Fehler aufgrund einer Drift oder Reflektorverschiebung liegt vor, wenn das Signal Uₖ im dritten Teilintervall bei freiem Überwachungsbereich nicht zwischen S1 und S2 liegt.

Zur Kompensation des Fehlers wird die Frequenz f₂ schrittweise solange geändert, bis das Signal Uₖ auf den Mittelwert zwischen S1 und S2 eingeregelt ist. Aus der neuen Frequenz f₂ werden dann neue Messfrequenzen f₁ und f₃ berechnet, die dann für die nachfolgenden Messzyklen verwendet werden.

Zur Funktionsüberprüfung des optischen Sensors 1 in vorgegebenen Zeitintervallen kann über die Auswerteeinheit der Sender deaktiviert und der Integrator 12 bei freiem Überwachungsbereich zurückgesetzt werden. Im fehlerfreien Fall muss dann das Signal Uₖ zwischen den Schwellwerten S1 und S2 liegen.

### Bezugszeichenliste

- (1): Optischer Sensor
- (2): Sender
- (3): Sendelichtstrahl
- (4): Empfangslichtstrahl
- (5): Empfänger
- (6): Objekt
- (7): Reflektor
- (8): Modulationseinheit
- (9): Rechnereinheit
- (10): Rechnereinheit
- (11): Synchrongleichrichter
- (12): Integrator
- (13): Vergleicher
- (14): Schaltausgang
- (15): Serielle Schnittstelle
- (16): Sende- und Empfangsoptik

## Patentansprüche

**1.** Optischer Sensor zur Erfassung von Objekten in einem Überwachungsbereich mit einem Sendelichtstrahlen emittierenden Sender, mit einem Empfangslichtstrahlen empfangenden Empfänger, mit einem den Überwachungsbereich begrenzenden Reflektor, mit einer Modulationseinheit zur Modulation der Sendelichtstrahlen mit wenigstens einer Messfrequenz und mit einer redundanten Auswerteeinheit, in welcher zur Ermittlung der Distanz des Reflektors oder eines in den Überwachungsbereich eindringenden Objekts die Phasenverschiebung der vom Reflektor oder Objekt zurückreflektierten und auf den Empfänger geführten Empfangslichtstrahlen bezüglich der in der Modulationseinheit ermittelten Messfrequenz zur Generierung eines binären Schaltsignals ermittelt wird, wobei die Schaltzustände des Schaltsignals angeben, ob ein Objekteingriff in den Überwachungsbereich erfolgt ist oder nicht, **dadurch gekennzeichnet, dass** in der Modulationseinheit (8) zyklisch nacheinander zwei Messfrequenzen generiert werden, wobei innerhalb jedes Messzyklus mit einer ersten Distanzmessung mit der ersten Messfrequenz f₁ geprüft wird, ob sich der Reflektor (7) hinter ersten Sollabstand d₁ befindet, und mit der zweiten Distanzmessung mit der zweiten Messfrequenz f₃ geprüft wird, ob sich der Reflektor (7) vor einem zweiten Sollabstand d₃ befindet, und dass in der Auswerteeinheit nur dann ein Schaltsignal mit dem Schaltzustand freier Überwachungsbereich generiert wird, wenn beide Prüfbedingungen innerhalb des Messzyklus erfüllt sind.

**2.** Optischer Sensor nach Anspruch 1, **dadurch gekennzeichnet, dass** in der Modulationseinheit (8) Messfrequenzen innerhalb eines vorgegebenen Frequenzbereichs generierbar sind.

**3.** Optischer Sensor nach einem der Ansprüche 1 oder 2, **dadurch gekennzeichnet, dass** zur Ermittlung der Phasendifferenzen ein Synchrongleichrichter (11) vorgesehen ist, welchem in der Modulationseinheit (8) generierte Taktsignale zur Erzeugung der Messfrequenzen und am Ausgang des Empfängers (5) generierte Empfangssignale zugeführt sind.

**4.** Optischer Sensor nach Anspruch 3, **dadurch gekennzeichnet, dass** dem Synchrongleichrichter (11) ein Integrator (12) nachgeordnet ist.

**5.** Optischer Sensor nach einem der Ansprüche 1 - 4, **dadurch gekennzeichnet, dass** die redundante Auswerteeinheit zwei sich gegenseitig überwachende Rechnereinheiten (9, 10) aufweist.

**6.** Optischer Sensor nach Anspruch 5, **dadurch gekennzeichnet, dass** mit den Rechnereinheiten (9, 10) ein Schaltausgang (14) zur Ausgabe des Schaltsignals angesteuert wird, wobei über den Schaltausgang (14) nur dann das Schaltsignal mit dem Schaltzustand freier Überwachungsbereich ausgegeben wird, wenn in beiden Rechnereinheiten (9, 10) übereinstimmend dieser Schaltzustand ermittelt wird.

**7.** Optischer Sensor nach Anspruch 6, **dadurch gekennzeichnet, dass** dieser zur Erfüllung der Sicherheitskategorie 4 selbstüberwachend ausgebildet ist.

**8.** Optischer Sensor nach einem der Ansprüche 1 bis 7, **dadurch gekennzeichnet, dass** bei der ersten Distanzmessung mit der ersten Messfrequenz f₁ das Ausgangssignal des Integrators (12) mit einem Schwellwert S1 bewertet wird, wobei sich der Reflektor (7) hinter dem ersten Sollabstand d₁ befindet, falls das Ausgangssignal oberhalb des Schwellwerts S1 liegt, und dass bei der zweiten Distanzmessung mit der zweiten Messfrequenz f₃ das Ausgangssignal des Integrators (12) mit einem Schwellwert S2 bewertet wird, wobei sich der Reflektor (7) vor dem zweiten Sollabstand d₁ befindet, falls das Ausgangssignal oberhalb des Schwellwerts S1 liegt, und dass bei der zweiten Distanzmessung mit der zweiten Messfrequenz f₃ das Ausgangssignal des Integrators (12) mit einem Schwellwert S2 bewertet wird, wobei sich der Reflektor (7) vor dem zweiten Sollabstand d₃ befindet, falls das Ausgangssignal unterhalb des Schwellwerts S2 liegt.

**9.** Optischer Sensor nach Anspruch 8, **dadurch gekennzeichnet, dass** in einem Einlernvorgang der Frequenzbereich der Modulationseinheit (8) durchfahren wird und dabei die Frequenz f2 ermittelt wird, bei welcher das Ausgangssignal zwischen den Schwellwerten S1 und S2 liegt, und dass aus der Frequenz f2 die Messfrequenzen f1, f3 abgeleitet werden.

**10.** Optischer Sensor nach einem der Ansprüche 8 oder 9, **dadurch gekennzeichnet, dass** in diesem ein Objekt als erkannt gemeldet wird, falls bei der Modulation des Senders (2) mit der ersten Messfrequenz f₁ das Ausgangssignal des Integrators (12) unterhalb des Schwellwerts S1 liegt.

**11.** Optischer Sensor nach einem der Ansprüche 7 - 10, **dadurch gekennzeichnet, dass** in diesem eine Verschiebung des Reflektors (7) aus seiner Sollposition dadurch erfassbar ist, dass bei Modulation des Senders (2) mit der Frequenz f₁ das Ausgangssignal des Integrators (12) den Schwellwert S1 nicht mehr überschreitet, oder dass bei Modulation des Senders (2) mit der Frequenz f₃ das Ausgangssginal des Integrators (12) den Schwellwert S2 nicht mehr unterschreitet.

**12.** Optischer Sensor nach Anspruch 11, **dadurch gekennzeichnet, dass** zur Kompensation der Verschiebung des Reflektors (7) aus der Sollposition die Frequenz f₂ in Schritten veränderbar ist, bis das Ausgangssignal des Integrators (12) bei freiem Überwachungsbereich auf einem vorgegebenem Wert zwischen den Schwellwerten S1 und S2 liegt. quenz f2 das Ausgangssignal des Integrators (12) nicht zwischen den Schwellwerten S1 und S2 liegt.

**14.** Optischer Sensor nach Anspruch 13, **dadurch gekennzeichnet, dass** zur Fehlerkompensation die Frequenz f₂ in Schritten veränderbar ist, bis das Ausgangssignal des Integrators (12) auf einem vorgegebenen Wert zwischen den Eckschwellwerten S1 und S2 liegt, und dass aus der geänderten Frequenz f₂ neue Messfrequenzen f₁, f₃ abgeleitet werden.
